# EUROPÄISCHE PATENTANMELDUNG

(11) **EP 4 360 802 A1**
(43) Veröffentlichungstag der Anmeldung: **01.05.2024**
(21) Anmeldenummer: 23202572.6
(22) Anmeldetag: 10.10.2023
(51) Int. Cl.: B23P 19/00, B23P 19/04, B60R 13/02, F16B 5/06

(54) **MONTAGEVORRICHTUNG UND MONTAGEVERFAHREN**

(30) Priorität: 27.10.2022 DE 102022128513
(71) Anmelder: Lisa Dräxlmaier GmbH, 84137 Vilsbiburg (DE)
(72) Erfinder: Fuchs, Matthias, 84034 Landshut (DE); Gattinger, Christian, 84036 Landshut (DE); Neudorfer, Christian, 84381 Johanniskirchen (DE)

(57) **Zusammenfassung**

Vorrichtung 1 zur Montage eines Bauteils 2 in eine korrespondierende Halterung 6 aufweisend: ein Halteelement 3 zur Aufnahme des Bauteils 2 und ein Gegenhalter 4, wobei das Halteelement 3 derart ausgebildet ist, sodass das Halteelement 3 eine Haltewirkung des Bauteils 2 erreicht, wobei der Gegenhalter 4 relativ zum Halteelement 3 zwischen einer Schließstellung und einer geöffneten Stellung entlang einer Achse 5 bewegbar ist, wobei der Gegenhalter 4 derart ausgebildet ist, sodass der Gegenhalter 4 in der Schließstellung das Bauteil 2 umfasst und wobei die Vorrichtung 1 derart ausgebildet ist, sodass die Vorrichtung 1 in der Schließstellung des Gegenhalters 4 das Bauteil auf der Achse 5 hält.

## Beschreibung

### Technisches Gebiet

Die vorliegende Erfindung betrifft eine Vorrichtung und ein Verfahren zur Montage eines Bauteils in eine korrespondierende Halterung sowie einen die Vorrichtung aufweisenden Manipulator.

### Stand der Technik

In Fahrzeugen werden Innenraumabdeckungen verwendet, um ein gefälliges Ambiente zu erzeugen beziehungsweise Schutz von beispielsweise Bauteilen und Elektronik zu gewährleisten.

Derartige Innenraumabdeckungen können über Clips an der Karosserie fixierte werden. Solche Clips können rotationssymmetrisch ausgestaltet sein.

Vorrichtungen zur Montage, d.h. Montagevorrichtungen, jener Clips an den Innenraumabdeckungen halten Clips an deren Spitze. Dazu wird die Clipspitze durch die Montagevorrichtung festgeklemmt und in die an der Innenraumabdeckung vorgesehenen Halterung, auch Doghouse genannt, eingeschoben und folglich montiert. Das Festklemmen des Clips in der Montagevorrichtung und die darauffolgende Montage des Clips in der Halterung führt häufig zu Beschädigungen des Clips wie auch der Halterung. Bereits bei dem beschriebenen Klemmvorgang kommt es häufig zu Beschädigungen der Spitze des Clips. Zudem wird der Clip quer zu axialen Erstreckung des Clips in die Halterung eingeschoben. Bei jenem Einschubvorgang kann es zu weiteren Beschädigungen kommen, da Kräfte quer zur axialen Richtung auf den Clip wirken, die nicht durch die Vorrichtung aufgenommen werden können.

### Beschreibung der Erfindung

Eine Aufgabe der Erfindung ist es daher, unter Einsatz konstruktiv möglichst einfacher Mittel eine Vorrichtung, ein die Vorrichtung aufweisenden Manipulator sowie ein korrespondierendes Verfahren zur Montage eines Bauteils in eine korrespondierende Halterung bereitzustellen, die/ das besonders bauteilschonend ist.

Die Aufgabe wird durch den Gegenstand des unabhängigen Anspruchs gelöst. Vorteilhafte Weiterbildungen der Erfindung sind in den abhängigen Ansprüchen, der Beschreibung und den begleitenden Figuren angegeben.

Eine erfindungsgemäße Vorrichtung zur Montage eines Bauteils in eine korrespondierende Halterung weist ein Halteelement zur Aufnahme des Bauteils und einen Gegenhalter auf, wobei das Halteelement derart ausgebildet ist, sodass das Halteelement eine Haltewirkung des Bauteils erreicht, wobei der Gegenhalter relativ zum Halteelement zwischen einer Schließstellung und einer geöffneten Stellung entlang einer Achse bewegbar ist, wobei der Gegenhalter derart ausgebildet ist, sodass der Gegenhalter in der Schließstellung das Bauteil umfasst und wobei die Vorrichtung derart ausgebildet ist, sodass die Vorrichtung in der Schließstellung des Gegenhalters das Bauteil auf der Achse hält.

Mittels der erfindungsgemäßen Vorrichtung erfolgt eine umfassende Abstützung des Bauteils, sodass bei der Montage des Bauteils in die korrespondierende Halterung auftretende Kräfte durch die Vorrichtung derart aufgenommen werden, sodass eine Beschädigung des Bauteils während der Montage vermieden wird. Zudem bieten das Halteelement sowie der Gegenhalter zwei über die Länge des Bauteils verteilte Stützflächen, sodass Torsionsmomente im Bauteil bei der Montage des Bauteils in die Halterung vermieden werden. Folglich erlaubt die Vorrichtung eine besonders bauteilschonende Montage des Bauteils in die Halterung. Durch eine bauteilschonende Montage werden im Vergleich zu einer herkömmlichen Montage Kräfte, die auf das Bauteil ausgeübt werden, bestmöglich durch die Halterung aufgenommen, sodass Torsionsmomente und damit Beschädigungen des Bauteils vermieden werden.
"sodass das Halteelement eine Haltewirkung des Bauteils erreicht" im Sinne der vorliegenden Erfindung beschreibt die Eigenschaft des Halteelementes das Bauteil aufzunehmen und in einer definierten Position auf der Achse zu halten. Halten in diesem Zusammenhang kann ein Begrenzen der Freiheitsgrade des Bauteils in wenigstens einer Raumdimension umfassen.

"Sodass der Gegenhalter in der Schließstellung das Bauteil umfasst" im Sinne der vorliegenden Erfindung bedeutet, dass der Gegenhalter derart ausgestaltet ist, sodass der Gegenhalter das Bauteil in der Schließstellung zumindest teilweise umgibt und folglich aufnimmt. Dementsprechend kann der Gegenhalter eine zu einem Teilabschnitt des Bauteils korrespondierende Form aufweisen. Umfassen in diesem Zusammenhang kann ein Begrenzen der Freiheitsgrade des Bauteils in wenigstens zwei Raumdimensionen umfassen.

Die Vorrichtung kann derart ausgebildet sein, sodass der Gegenhalter in der Schließstellung im Zusammenspiel mit dem Halteelement das Bauteil auf der Achse hält, d.h. in allen Raumrichtungen fixiert. Dementsprechend kann die Vorrichtung derart ausgebildet sein, sodass nur der Gegenhalter in der Schließstellung und das Haltelement im Kontakt mit dem gehaltenen Bauteil stehen. Das heißt für eine Fixierung des Bauteils kann es ausreichend sein, wenn das Halteelement und der Gegenhalter das Bauteil halten und umfassen

Der Gegenhalter kann eine erste Ausnehmung zur Aufnahme eines Teilabschnitts des Bauteils aufweisen.

Zudem kann das Halteelement derart ausgebildet sein, sodass das Halteelement die auf das Bauteil bei dessen Montage in die Halterung ausgeübten Kräfte zumindest teilweise aufnimmt.

So kann das Halteelement derart ausgebildet sein, sodass das Halteelement auf das Bauteil während der Montage ausgeübte Kräfte, die sich quer zur Achse erstrecken, aufnimmt.

Das Halteelement und/ oder der Gegenhalter können derart ausgebildet sein, sodass das Bauteil durch das Halteelement und/ oder der Gegenhalter mehrdimensional beziehungsweise in verschiedenen Richtung Stützung erfährt. Auf diese Art und Weise können die bei der Montage auf das Bauteil ausgeübten Kräfte durch die Vorrichtung aufgenommen werden und so eine besonders bauteilschonende Montage des Bauteils ermöglicht werden. Zudem werden durch über die Länge des Bauteils verteilte, bevorzugt mehrdimensionale, Stützungen Torsionsmomente im Bauteil verringert.

Gemäß einer Ausführungsform kann das Halteelement eine Kontur aufweisen, welche derart ausgebildet ist, sodass die Kontur in das Bauteil eingreift, bevorzugt in eine entsprechende Gegenkontur des Bauteils eingreift. Dementsprechend kann die Kontur derart ausgebildet sein, sodass die Kontur eine zum Bauteil korrespondierende Form aufweist.

Das Halteelement kann so eine besonders umfassende, mehrdimensional Haltewirkung des Bauteils erreichen, da durch das Eingreifen der Kontur in das Bauteil bei der Montage auf das Bauteil ausgeübte Kräfte besser durch das Halteelement aufgenommen werden können. Dementsprechend ist eine besonders bauteilschonende Montage des Bauteils in der Halterung möglich. Eine "mehrdimensionale Haltewirkung" im Letzt genannten Sinne bedeutete eine Haltewirkung des Bauteils durch das Haltelement in mehreren Raumdimensionen.

Das Halteelement kann derart ausgebildet sein, sodass die Kontur das Bauteil umfasst beziehungsweise teilweise umschließt.

Gemäß einer Ausführungsform kann der Gegenhalter und/ oder die erste Ausnehmung des Gegenhalters zylinderförmig sein. Insbesondere im Falle eines im Wesentlichen rotationssymmetrischen Bauteils kann durch die zylindrische Ausgestaltung der ersten Ausnehmung eine umfassende und flächige Stützwirkung erreicht werden, sodass, wie bereits mehrfach beschrieben wurde, eine besonders bauteilschonende Montage ermöglicht wird.

Gemäß einer Ausführungsform kann der Gegenhalter zwischen der Schließstellung und der geöffneten Stellung verfahrbar, bevorzugt elektrisch und/ oder pneumatisch, verfahrbar sein. "Gegenhalter zwischen der Schließstellung und der geöffneten Stellung verfahrbar" ist im Sinne der vorliegenden Erfindung eine gesteuerte Bewegbarkeit des Gegenhalters. Das heißt die Position des Gegenhalters entlang der Achse kann durch gezieltes Verfahren des Gegenhalters auf der Achse aktiv eingestellt werden. Dazu kann die Vorrichtung beispielsweise einen Elektromotor und/ oder eine Pneumatikeinheit aufweisen, der/ die als Antrieb für den verfahrbaren Gegenhalter dient.

Denkbar ist auch eine durch Federkraft ermöglichte Verfahrbarkeit des Gegenhalters. Durch ein Verfahren des Gegenhalters zwischen der Schließstellung und der geöffneten Stellung kann die Aufnahme des Bauteils in die Vorrichtung teilautomatisiert werden.

Gemäß einer Ausführungsform kann die Vorrichtung zumindest eine, bevorzugt zwei Führungsbacken aufweisen. Zudem kann die Führungsbacke eine Längserstreckung quer zur Achse aufweisen.

Führungsbacken können die Aufnahme des Bauteils durch die Vorrichtung erleichtern. So kann durch zumindest eine bzw. zwei Führungsbacken eine gezielte und zentrierte Aufnahme des Bauteils erfolgen. Zudem kann die zumindest eine Führungsbacke ebenfalls eine Stützwirkung des Bauteils auf der Achse ermöglichen. So kann die Führungsbacke eine zusätzliches Stützelement darstellen, das im Kontakt mit dem Bauteil steht und jenes folglich stützt. Durch diese zusätzliche Stützwirkung kann folglich eine besonders bauteilschonende Montage des Bauteils in der Halterung ermöglicht werden.

Gemäß einer Ausführungsform kann die Vorrichtung zwei Führungsbacken aufweisen, wobei die zwei Führungsbacken derart ausgebildet sind, sodass die beiden Führungsbacken das Bauteil teilweise umfassen.

Durch das Umfassen des Bauteils kann eine mehrdimensionale Stützwirkung erfolgen und die Stützfläche vergrößert werden. Eine vergrößerte Stützfläche ermöglicht wiederum eine besonders bauteilschonende Montage des Bauteils in der Halterung.

Gemäß einer Ausführungsform kann die zumindest eine Führungsbacke ein Löseelement aufweisen, wobei das Löseelement derart ausgebildet ist, sodass das Löseelement bei der Montage des Bauteils in der korrespondierenden Halterung eine an der Halterung angeordnete Verliersicherung löst.

Alternativ oder zusätzlich kann das Halteelement ein Löseelement aufweisen, wobei das Löseelement derart ausgebildet ist, sodass das Löseelement bei der Montage des Bauteils in der korrespondierenden Halterung eine an der Halterung angeordnete Verliersicherung löst.

Das Löseelement kann beispielsweise durch eine Oberfläche der zumindest einen Führungsbacke gebildet werden. Alternativ kann das Löseelement eine an der Führungsbacke angeordnete Noppe sein.

Eine Verliersicherung kann ein an der Halterung vorgesehenes Element sein, das ein herausrutschen des Bauteils aus der Halterung im montierten Zustand verhindert. Die Verliersicherung kann eine in der Halterung integrierte Auswölbung oder Pin sein, die während der Montage durch das Löseelement reversibel in die Halterung gedrückt wird, sodass erst dann ein Einschieben des Bauteils in die Halterung möglich wird. Die Anordnung eines Löseelementes an der Führungsbacke ermöglicht folglich eine schnellere und vereinfachte Montage des Bauteils in der Halterung.

Gemäß einer Ausführungsform kann die Vorrichtung derart ausgebildet sein, sodass das Bauteil quer zur Achse in die Vorrichtung aufnehmbar ist.

Dementsprechend kann die Vorrichtung derart ausgebildet sein, sodass ein im Wesentlichen rotationssymmetrisch ausgebildetes Bauteil in radialer Richtung in die Vorrichtung aufnehmbar ist. Hierbei kann die Rotationsachse des Bauteils mit der Achse fluchten, wenn das Bauteil in die Vorrichtung aufgenommen ist.

Eine derartige Aufnahme des Bauteils in die Vorrichtung erlaubt eine besonders effiziente und schonende Montage des Bauteils in der Halterung. So kann das Bauteil auf diese Art besonders einfach und schnell in die Vorrichtung aufgenommen sowie in der Halterung montiert werden.

Das Bauteil kann ein Clip zur Verbindung zweier Elemente miteinander, wie beispielsweise einer Türinnenverkleidung mit der Tür eines Fahrzeugs, sein. Bevorzugt ist dazu das Bauteil beziehungsweise der Clip im Wesentlichen rotationssymmetrisch ausgebildet.

Gemäß einem zweiten Aspekt der Erfindung wird die Aufgabe durch einen Manipulator aufweisend Vorrichtung der oben beschriebenen Art gelöst.

Dementsprechend kann die erfindungsgemäße Vorrichtung durch den Manipulator verfahren beziehungsweise im Raum bewegt werden. Mittels des erfindungsgemäßen Manipulators kann eine automatisierte Montage des Bauteils in der korrespondierenden Halterung auf besonders bauteilschonende Art und Weise ermöglicht werden.

Gemäß einem dritten Aspekt der Erfindung wird die Aufgabe durch ein Verfahren zur Montage eines Bauteils in eine korrespondierende Halterung mittels einer erfindungsgemäßen Vorrichtung gelöst, das die folgenden Verfahrensschritte aufweist:
- Bereitstellen des Bauteils,
- In Kontakt bringen des Halteelements der Vorrichtung mit dem bereitgestellten Bauteil, sodass das Halteelement eine Haltewirkung des Bauteils erreicht,
- Bewegen des Gegenhalters von einer geöffneten Stellung in eine Schließstellung entlang einer Achse, sodass der Gegenhalter das mit dem Halteelement in Kontakt gebrachte Bauteil umfasst und die Vorrichtung das Bauteil auf der Achse hält,
- Einsetzen des auf der Achse gehaltenen Bauteils in die Halterung.

Mittels des erfindungsgemäßen Verfahrens ist eine besonders bauteilschonende Montage des Bauteiles in der Halterung möglich. Eine über die Erstreckung des Bauteils verteilte und flächige Stützung des Bauteils während der Montage wird insbesondere mittels des Halteelements und des Gegenhalters erreicht. Dementsprechend können die bei der Montage auf das Bauteil entstehenden Kräfte besonders gut von der Vorrichtung aufgenommen werden und so Torsionsmoment im Bauteil verringert werden.

Gemäß einer Ausführungsform kann das erfindungsgemäße Verfahren zusätzlich den folgenden Verfahrensschritt aufweisen: Lösen einer an der Halterung angeordneten Verliersicherung bei der Montage des Bauteils in der Halterung.

Bevorzugt erfolgt das Lösen der Verliersicherung beim Bewegen der Vorrichtung zur korrespondierenden Halterung, besonders bevorzugt indem die Vorrichtung in eine Montage Position bewegt wird, in der durch die Vorrichtung die an der Halterung angeordnete Verliersicherung gelöst wird.

Zudem kann die erfindungsgemäße Vorrichtung zur Montage eines Bauteils, besonders bevorzugt eines Clips, verwendet werden. Ein Verfahren zur Montage des Bauteils mittels der erfindungsgemäßen Vorrichtung kann folgende Verfahrensschritte aufweisen:
- Bereitstellen eines ersten Bauteilelements,
- In Kontakt bringen des Halteelements der Vorrichtung mit dem ersten Bauteilelement, sodass das Halteelement eine Haltewirkung des ersten Bauteilelements erreicht,
- Anordnen eines zweiten Bauteilelements auf dem ersten Bauteilelement,
- Bewegen des Gegenhalters von einer geöffneten Stellung in eine Schließstellung entlang einer Achse, sodass der Gegenhalter das zweite Bauteilelement auf das erste Bauteilelement bewegt und infolgedessen das Bauteil montiert.

Nach der beschriebenen Montage des Bauteils kann in einem weiteren Verfahren das Bauteil, entsprechend den zuvor definierten Verfahrensschritten, in der korrespondierenden Halterung montiert werden.

### Kurze Figurenbeschreibung

Nachfolgend werden vorteilhafte Ausführungsbeispiele der Erfindung unter Bezugnahme auf die begleitenden Figuren erläutert. Es zeigen:
Figur 1 eine Vorrichtung gemäß einem ersten Ausführungsbeispiel der Erfindung mit einem Gegenhalter in geöffneter Stellung,
Figur 2 eine Vorrichtung gemäß einem zweiten Ausführungsbeispiel der Erfindung mit einem Gegenhalter in geöffneter Stellung,
Figur 3 die Vorrichtung gemäß dem zweiten Ausführungsbeispiel der Erfindung mit dem Gegenhalter in Schließstellung.

### Ausführliche Figurenbeschreibung

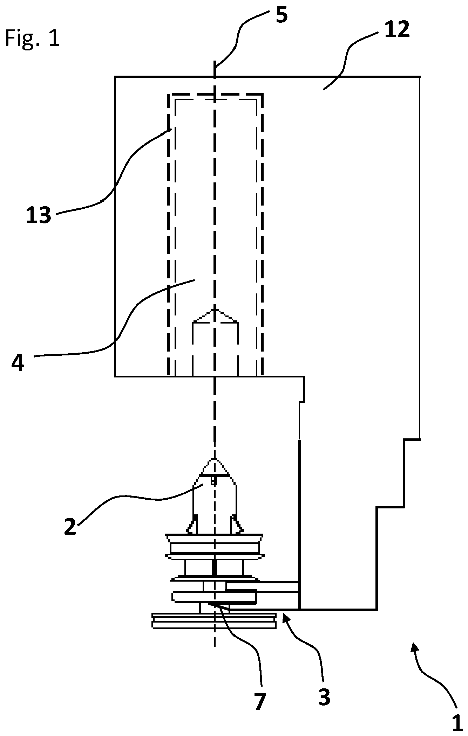

Figur 1 zeigt eine Vorrichtung 1 gemäß einem ersten Ausführungsbeispiel. Die Vorrichtung 1 weist im Wesentlichen ein starres Halteelement 3 und einen entlang einer Achse 5 relativ zum Halteelement 3 bewegbaren Gegenhalter 4 auf. In Figur 1 befindet sich der Gegenhalter 4 in einer geöffneten Position. Ein zu montierendes Bauteil 2 wird durch das Halteelement 3 auf der Achse 5 gehalten. Das Bauteil 2 weist, wie in den Figuren beispielshaft gezeigt wird, eine Struktur mit unterschiedlich tiefen Nuten auf. In einem alternativen Ausführungsbeispiel kann das Bauteil auch lediglich eine Nut, mehrere gleichtiefe Nuten oder einen Vorsprung aufweisen. Bei einem rotationssymmetrischen Bauteil 2 können sich jene Nuten um das Bauteil 2 herum erstrecken. Das Halteelement 3 weist eine Kontur 7 auf, die derart ausgebildet ist, sodass die Kontur 7 in die Nuten des Bauteils 2 eingreifen. Die Kontur 7 ist dazu korrespondierend zum Bauteil 2 ausgebildet. Sowohl das Halteelement 3 als auch der Gegenhalter 4 sind an einem Grundkörper 12 angeordnet. Der Grundkörper 12 weist eine zweite Ausnehmung 13 auf, die korrespondierend zum Gegenhalter 4 ausgebildet ist. Dazu ist die zweite Ausnehmung 13 derart ausgebildet sein, sodass der Gegenhalter 4 in der Schließstellung vollständig oder teilweise des Grundkörpers 12 angeordnet ist.

In einem weiteren Ausführungsbeispiel kann das Halteelement 3jedoch auch nicht korrespondierend zum Bauteil 2 ausgebildet sein. Denkbar ist beispielsweise ein Halteelement 3, das das Bauteil 2 umfasst, sodass das Bauteil 2 durch die durch das Umfassen entstehende Reibungskraft gehalten wird. Zudem kann das Halteelement 3 in einem weiteren alternativen Ausführungsbeispiel Magnete aufweisen, sodass das Bauteil 2 mittels einer Magnetkraft durch das Halteelement 3 gehalten wird. Auch eine Kombination jener zuletzt beschriebenen Ausprägungen des Halteelementes 3 ist denkbar.

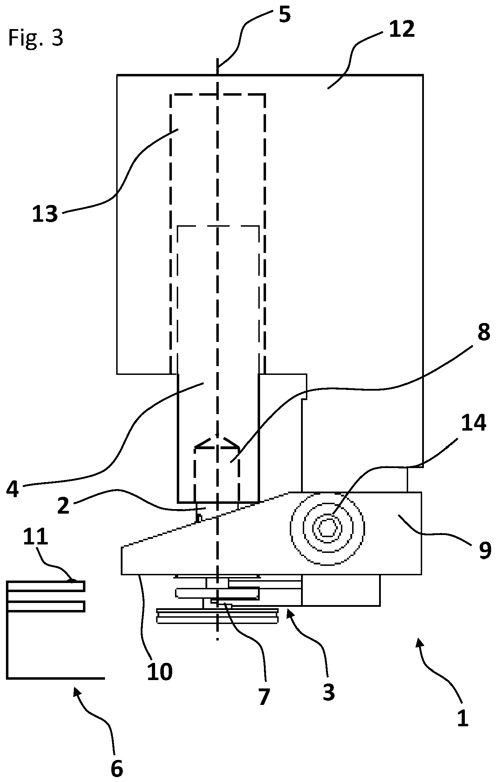

Des Weiteren ist in Figur 1 gezeigt, dass der Gegenhalter 4 zylinderförmig ausgebildet ist und eine erste Ausnehmung 8 aufweist. Die erste Ausnehmung 8 kann dabei eine zum Bauteil 2 korrespondierende Form aufweisen, sodass der Gegenhalter 4 in einer Schließstellung, wie in Figur 3 zu einem zweiten Ausführungsbeispiel gezeigt wird, das Bauteil 2 umschließt.

In einem weiteren alternativen Ausführungsbeispiel kann der Gegenhalter 4 jedoch auch eine andere Form aufweisen, so kann der Gegenhalter 4 beispielsweise quaderförmig ausgebildet sein. Gemäß einem weiteren Ausführungsbeispiel kann der Gegenhalter 4 auch ein Gestänge oder eine Stange aufweisen, die beispielsweise mit einem weiteren, eine erste Ausnehmung 8 aufweisenden Element verbunden ist. Dieses Element wiederum kann derart ausgebildet sein, sodass das Element in der Schließstellung das Bauteil 2 umfasst.

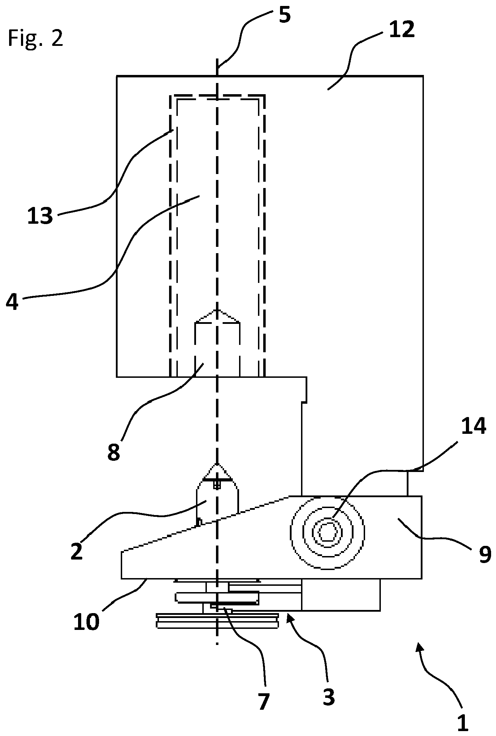

Figur 2 zeigt eine Vorrichtung 1 gemäß einem zweiten Ausführungsbeispiel der Erfindung. Der prinzipielle Aufbau des zweiten Ausführungsbeispiels gleicht im Wesentlichen dem Aufbau des ersten Ausführungsbeispiel. Die Vorrichtung 1 gemäß dem zweiten Ausführungsbeispiel unterscheidet sich dadurch vom ersten Ausführungsbeispiel, dass das zweite Ausführungsbeispiel zusätzlich zwei Führungsbacken 9 aufweist. In Figur 2 ist nur eine Führungsbacke 9 abgebildet, da die zweite Führungsbacke 9 durch die erste Führungsbacke 9 verdeckt wird. Dementsprechend sind die beiden Führungsbacken 9 derart angeordnet und ausgebildet, sodass die beiden Führungsbacken 9 das Bauteil 2 teilweise umfassen. Die Führungsbacken 9 sind am Grundkörper 12 befestigt. Wie in Figur 2 gezeigt wird, können die Führungsbacken 9 mittels einer Schraubverbindung 14 mit dem Grundkörper 12 verbunden werden. In einem weiteren alternativen Ausführungsbeispiel können die Führungsbacken 9 beispielsweise mit dem Grundkörper 12 verschweißt sein.

Die Führungsbacken 9 können derart ausgebildet sein, sodass die Längserstreckungen der Führungsbacken 9 sich quer zur Achse 5 erstrecken.

Der Abstand der beiden Führungsbacken 9 von einander entspricht vorzugsweise im Wesentlichen der Breite beziehungsweise dem Durchmesser des Bauteils 2. Die Form der Führungsbacken 9 kann derart ausgestaltet sein, sodass die Form an das aufzunehmende Bauteil 2 angepasst ist. Die einander zugewandten Seiten der Führungsbacken 9 weisen eine Struktur auf, die einer Kontur des Bauteils wenigstens teilweise entspricht.

Figur 3 zeigt ebenfalls die Vorrichtung 1 gemäß dem zweiten Ausführungsbeispiel, jedoch befindet sich im Gegensatz zur Darstellung gemäß Figur 2 der Gegenhalter 4 der Vorrichtung 1 hier in der geschlossenen Stellung. In der geschlossenen Stellung des Gegenhalters 4 wird das Bauteil 2 zusammen mit dem Halteelement 3 in der Achse 5 gehalten beziehungsweise fixiert. Dazu kann der Gegenhalter 4 derart ausgebildet sein, sodass der Gegenhalter 4 auf das Bauteil 2 aufgesetzt wird und das Bauteil 2 teilweise umschließt. Zunächst wird das Bauteil 2 durch das Halteelement 3 aufgenommen. Dazu wird das Bauteil 2 durch das Haltelement 3 derart aufgenommen, sodass das Bauteil 2 quer zur Achse 5 und/ oder quer zur Haupterstreckungsachse beziehungsweise Rotationsachse des Bauteils 2 in das Haltelement 3 aufgenommen wird. Das Haltelement 3 ist derart ausgebildet, sodass das Haltelement 3 das Bauteil 2 aufnimmt und insbesondere in Richtung der Achse 5 hält beziehungsweise unterstützt. Die Haupterstreckungsachse beziehungsweise Rotationsachse des aufgenommenen Bauteils 2 fluchtet vorzugsweise mit der Achse 5. Darauffolgend wird der Gegenhalter 4 in die Schließstellung bewegt, sodass das Bauteil 2 in der Achse 5 gehalten wird. Anschließend wird das gehaltene Bauteil 2 mit der Vorrichtung 1 zur Halterung 6 bewegt. Des Weiteren wird das Bauteil 2 in der Halterung 6 montiert. Dazu weist zumindest eine der Führungsbacken 9 ein Löseelement 10 auf. Das Löseelement 10 ist dabei eine Oberfläche wenigstens einer der Führungsbacken 9. Zusätzlich oder alternativ ist das Löseelement 10 in einem weiteren Ausführungsbeispiels eine Ausstülpung oder eine Noppe. Bei der Montage des Bauteils 2 in der Halterung 6 wird die Führungsbacke 9 mit dem Löseelement 10 derart positioniert, sodass das Löseelement 10 eine Verliersicherung 11 berührt und in die Halterung 6 drückt. Dies ermöglicht schließlich die Montage des Bauteils 2, indem das Bauteil 2 entlang der Nuten des Bauteils 2 in die Halterung 6 eingeschoben wird. Anschließend wird der Gegenhalter 4 zurück in die geöffnete Stellung bewegt. Das anschließende Wegbewegen der Vorrichtung 1 von der Halterung 6 resultiert in der Loslösung des Bauteils 2 vom Halteelement 3. Durch das Wegbewegen der Vorrichtung 1 von der Halterung 6 steht zudem das Löseelement 10 nicht länger im Kontakt mit der Verliersicherung 11 der Halterung 6, sodass die Verliersicherung 11 wieder ihre ursprüngliche Position einnimmt und ein ungewolltes Herausrutschen des Bauteils 2 aus der Halterung 6 verhindert.

Die Figuren sind lediglich schematische Darstellungen und dienen nur der Erläuterung der Erfindung. Gleiche oder gleichwirkende Elemente sind durchgängig mit den gleichen Bezugszeichen versehen.

### BEZUGSZEICHENLISTE

- 1: Vorrichtung
- 2: Bauteil
- 3: Halteelement
- 4: Gegenhalter
- 5: Achse
- 6: Halterung
- 7: Kontur
- 8: erste Ausnehmung
- 9: Führungsbacke
- 10: Löseelement
- 11: Verliersicherung
- 12: Grundkörper
- 13: zweite Ausnehmung
- 14: Schraubverbindung

## Patentansprüche

1. Vorrichtung (1) zur Montage eines Bauteils (2) in eine korrespondierende Halterung (6) aufweisend:
• ein Halteelement (3) zur Aufnahme des Bauteils (2), und
• ein Gegenhalter (4),
wobei das Halteelement (3) derart ausgebildet ist, sodass das Halteelement (3) eine Haltewirkung des Bauteils (2) erreicht,
wobei der Gegenhalter (4) relativ zum Halteelement (3) zwischen einer Schließstellung und einer geöffneten Stellung entlang einer Achse (5) bewegbar ist,
wobei der Gegenhalter (4) derart ausgebildet ist, sodass der Gegenhalter (4) in der Schließstellung das Bauteil (2) umfasst, und
wobei die Vorrichtung (1) derart ausgebildet ist, sodass die Vorrichtung (1) in der Schließstellung des Gegenhalters (4) das Bauteil auf der Achse (5) hält.

2. Vorrichtung (1) nach Anspruch 1, wobei das Halteelement (3) eine Kontur (7) aufweist, welche derart ausgebildet ist, sodass die Kontur (7) in das Bauteil (2) eingreift.

3. Vorrichtung (1) nach einem der vorhergehenden Ansprüche, wobei der Gegenhalter (4) und/ oder die erste Ausnehmung (8) des Gegenhalters (4) zylinderförmig ist.

4. Vorrichtung (1) nach einem der vorhergehenden Ansprüche, wobei der Gegenhalter (4) zwischen der Schließstellung und geöffneten Stellung verfahrbar, bevorzugt elektrisch und/ oder pneumatisch verfahrbar ist.

5. Vorrichtung (1) nach einem der vorhergehenden Ansprüche, wobei die Vorrichtung (1) zumindest eine, bevorzugt zwei Führungsbacken (9) aufweist, und wobei die Führungsbacke (9) besonders bevorzugt eine Längserstreckung quer zur Achse (5) aufweist.

6. Vorrichtung (1) nach einem der vorhergehenden Ansprüche, wobei die Vorrichtung (1) zwei Führungsbacken (9) aufweist, und
wobei die zwei Führungsbacken (9) derart ausgebildet sind, sodass die beiden Führungsbacken (9) das Bauteil (2) teilweise umfassen.

7. Vorrichtung (1) nach einem der Ansprüche 5 oder 6, wobei zumindest eine Führungsbacke (9) ein Löseelement (10) aufweist,
wobei das Löseelement (10) derart ausgebildet ist, sodass das Löseelement (10) bei der Montage des Bauteils (2) in der korrespondierenden Halterung (6) eine an der Halterung (6) angeordnete Verliersicherung (11) löst.

8. Vorrichtung (1) nach einem der vorhergehenden Ansprüche, wobei die Vorrichtung (1) derart ausgebildet ist, sodass das Bauteil (2) quer zur Achse (5) in die Vorrichtung (1) aufnehmbar ist.

9. Manipulator aufweisend eine Vorrichtung (1) gemäß einem der vorhergehenden Ansprüchen.

10. Verfahren zur Montage eines Bauteils (2) in eine korrespondierende Halterung (6) mittels einer Vorrichtung (1) gemäß einem der Ansprüche 1 bis 9 aufweisend die Verfahrensschritte:
• Bereitstellen des Bauteils (2),
• In Kontakt bringen des Halteelements (3) der Vorrichtung (1) mit dem bereitgestellten Bauteil (2), sodass das Halteelement (3) eine Haltewirkung des Bauteils (2) erreicht,
• Bewegen des Gegenhalters (4) von einer geöffneten Stellung in eine Schließstellung entlang einer Achse (5), sodass der Gegenhalter (4) das mit dem Halteelement (3) in Kontakt gebrachte Bauteil (2) umfasst und die Vorrichtung das Bauteil (2) auf der Achse (5) hält,
• Einsetzen des auf der Achse (5) gehaltenen Bauteils (2) in die Halterung (6).

11. Verfahren nach Anspruch 10 zusätzlich aufweisend den Verfahrensschritt:
• Lösen einer an der Halterung (6) angeordneten Verliersicherung (11) bei der Montage des Bauteils (2) in der Halterung (6).
